# EUROPEAN PATENT SPECIFICATION

(11) **EP 2 551 086 B1**
(45) Date of publication and mention of the grant of the patent: **19.03.2014**
(21) Application number: 11175695.3
(22) Date of filing: 28.07.2011
(51) Int. Cl.: B01D 67/00, B01D 61/14, B01D 61/24, B01D 69/08, B29B 7/48, C08J 3/02, B29B 7/84, C08L 39/06, C08J 3/00, C08J 3/11, D01D 1/02, C08L 81/06, D01F 6/94, D01F 6/56

(54) **Process for producing a spinning solution**
Verfahren zur Herstellung einer Spinnlösung
Procédé de production d'une solution de filage

(43) Date of publication of application: 30.01.2013
(73) Proprietor: Gambro Lundia AB, 220 10 Lund (SE)
(72) Inventor: Wagner, Steffen, 72469 Meßstetten (DE); Krause, Bernd, 72414 Rangendingen (DE); Hornung, Markus, 72147 Nehren (DE)
(74) Representative: Perchenek, Nils

(56) References cited:
- WO-A1-2007/128488
- US-A- 4 935 141
- DATABASE CA [Online] CHEMICAL ABSTRACTS SERVICE, COLUMBUS, OHIO, US; 3 March 1990 (1990-03-03), KOBAYASHI, YOSHINOBU ET AL: "Continuous preparation of acrylonitrile polymer solutions for manufacture of synthetic fibers and films", XP002665275, retrieved from STN Database accession no. 1990:78912 -& JP 1 234425 A (KANEGAFUCHI CHEMICAL IND) 19 September 1989 (1989-09-19)
- , 1 December 2004 (2004-12-01), XP55013866, Retrieved from the Internet: URL:http://www.luvitec.de/portal/load/fid3 67748/BASF - Ultrason E and S_Luvitec K for Membrane.pdf [retrieved on 2011-12-05]

## Description

### Technical Field

The present disclosure relates to a continuous process for preparing a spinning solution for dialysis membranes which involves a multiple screw extruder.

### Description of the Related Art

Spinning solutions for the production of dialysis membranes conventionally are prepared by providing multiple polymer components, solvents, and additives to a mixing vessel and stirring the mixture until a homogeneous solution is obtained. This process usually requires 2-3 hours. The solution is subsequently degassed in a separate unit to remove any dissolved air from the solution and transferred to a storage tank. The extended time required to prepare the spinning solution is a drawback of this process. As it is a batch process, it also does not allow for a rapid change of the composition of the spinning solution during membrane production. The recipe of the spinning solution can only be changed when the storage tank has been emptied; i.e. from batch to batch.

It would be desirable to have a process for the production of spinning solutions for dialysis membranes which is faster and more flexible.

JP 1234425 A describes a process for continuously preparing a spinning stock solution by kneading an acrylonitrile-based polymer in an engaging type multiple screw extruder with a solvent for the polymer.

DE 4027888 A1 discloses a process for the continuous dissolution of gelatine wherein gelatine powder and a solvent are continuously fed to a screw extruder and mixed by applying shear force at elevated temperature and pressure to produce a liquid gelatine solution.

US 4784820 A teaches a process for the preparation of homogeneous solutions of ultrahigh molecular weight polyolefins which comprises forming a slurry of particles of the polymer in a solvent for the polymer, pumping the slurry under pressure to a single screw extruder and maintaining the slurry in the screw extruder until a homogeneous solution is formed.

Up to now, extruders have not been used to prepare multicomponent spinning solutions such as those required for the production of dialysis membranes which typically comprise a multitude of solid and liquid constituents differing in physical properties such as viscosity, solubility, or boiling temperature.

### Summary

It has now been found that spinning solutions for dialysis membranes can be prepared continuously using a multiple screw extruder.

A principal aim of the present invention is to provide a flexible and fast process for the production of spinning solutions for dialysis membranes.

The process of the invention involves continuously feeding at least one hydrophobic polymer, at least one hydrophilic polymer, a solvent for the polymers, and, optionally, a non-solvent for the polymers to a multiple screw extruder and mixing the components in the extruder to form a homogeneous solution.

Further characteristics and advantages of the present invention will better emerge from the detailed description that follows of at least a preferred embodiment of the invention, illustrated purely in the form of a nonlimiting example.

### Detailed Description

The present invention provides a continuous process for preparing a spinning solution comprising
i) continuously introducing into the feed zone of a multiple screw extruder
   a) at least one hydrophobic polymer,
   b) at least one hydrophilic polymer,
   c) at least one solvent for the hydrophobic polymer and the hydrophilic polymer, and
   d) optionally, at least one non-solvent for the hydrophobic polymer;
ii) continuously mixing a) to d) in the multiple screw extruder to form a homogeneous solution;
iii) continuously discharging the solution formed in step ii) from the multiple screw extruder.

The at least one hydrophobic polymer is selected from the group consisting of polysulfones, polyethersulfones, polyamides, polycarbonates, polyethyleneimines, and cycloolefin copolymers. In one embodiment of the process, the hydrophobic polymer is a polysulfone. In another embodiment of the process, the hydrophobic polymer is a polyethersulfone.

The at least one hydrophilic polymer is selected from the group consisting of polyvinylpyrrolidones, polyethyleneglycols, and polyoxazolines. In one embodiment of the process, the hydrophobic polymer is a polyvinylpyrrolidone. In another embodiment of the process, the hydrophobic polymer is a mixture of a polyvinylpyrrolidone having a molecular weight of less than 100,000 g/mol and a polyvinylpyrrolidone having a molecular weight of at least 100,000 g/mol.

The solvent is selected from the group consisting of N-alkyl-2-pyrrolidones, dimethylacetamide, dimethylsulfoxide, tetrahydrofurane, gamma-butyrolactone, and dimethylformamide. In one embodiment of the process, the solvent is N-methyl-2-pyrrolidone.

In one embodiment of the process, the non-solvent is selected from the group consisting of water and aliphatic alcohols.

In one embodiment of the process, the multiple screw extruder is a co-rotating twin screw extruder. In one embodiment of the process, the working length of the multiple screw extruder is 40D to 80D. In one embodiment of the process, the multiple screw extruder is operated at 50 to 250 rpm. In one embodiment of the process, the screws of the multiple screw extruder predominantly comprise mixing elements (kneading elements), the other elements being selected from conveying elements and comminuting elements. In another embodiment of the process, the screws of the multiple screw extruder exclusively comprise mixing elements. In one embodiment of the invention, the screws of the multiple screw extruder have a thread pitch of less than 30 mm. In one embodiment of the process, the temperature in the mixing zones of the multiple screw extruder is in the range of from 20°C to 210°C, for instance in the range of from 40°C to 100°C. In one embodiment of the process, the residence time in the multiple screw extruder is in the range of from 1 to 5 min.

In one embodiment of the process, the solution formed in step ii) is degassed prior to being discharged from the multiple screw extruder. In one embodiment of the process, the pressure in the end zone of the multiple extruder is reduced below atmospheric pressure to effect degassing of the solution formed in step ii).

It will be understood that the features mentioned above and those described hereinafter can be used not only in the combination specified but also in other combinations or on their own, without departing from the scope of the present invention.

The present invention will now be described in more detail in the examples below. It is to be understood that the examples are not intended to limit the scope of the present invention and are merely an illustration of a preferred embodiment of the invention.

### Examples

The viscosity of the polymer solution is the dynamic viscosity, if not otherwise indicated. To measure the viscosity of the polymer solution, a commercial rheometer (MCR 101, Anton Paar GmbH) was used. The polymer solution is placed between two temperature-controlled plates. The measurement is performed at 22°C. All other measurement conditions are according to the manufacturer's instructions.

### Starting materials

- PES: polyethersulfone Ultrason^{®} E 6020 P, BASF S.E.; M_{w} = 46-55 kDa; M_{w/}Mₙ = 3.0-4.0;
- PVP-K30: polyvinylpyrrolidone Luvitec^{®} K30, BASF S.E.; Mₙ = 14 kDa, M_{w} = 50 kDa;
- PVP-K85: polyvinylpyrrolidone Luvitec^{®} K85, BASF S.E.; Mₙ = 250 kDa, M_{w} = 1,100 kDa.

### Example 1

PES, PVP-K30, and PVP-K85 were continuously fed to the feeding zone of a co-rotating twin-screw extruder having a working length of 40 D (ZSE 27 HP-PH 40D, Leistritz Extrusionstechnik GmbH, D-90459 Nürnberg) using screw feeders. Simultaneously, NMP and water were continuously fed to the feeding zone of the extruder. The weight ratio of the individual feed streams was 14 PES/2 PVP-K85/5 PVP-K30/76 NMP/3 water. The extruder was thermostatted at 70°C and operated at 100 rpm. The screws of the extruder comprised mixing elements only. A polymer solution comprising small agglomerates was obtained.

### Example 2

PES was continuously fed to the feeding zone of a co-rotating twin-screw extruder having a working length of 40 D (ZSE 27 HP-PH 40D, Leistritz Extrusionstechnik GmbH, D-90459 Nürnberg) using a screw feeder. Simultaneously, NMP and water were continuously fed to the feeding zone of the extruder. PVP-K30 and PVP-K85 were continuously fed to the extruder at between 24D and 28D using screw feeders. The weight ratio of the individual feed streams was 14 PES/2 PVP-K85/5 PVP-K30/76 NMP/3 water. The extruder was thermostatted at 78°C. Several experiments were conducted in which the extruder was operated at different velocities in the range of from 150 rpm to 350 rpm. The screws of the extruder comprised mixing elements only. The polymer solutions obtained still comprised some agglomerates, but less than in Example 1.

### Example 3

PES, PVP-K30, and PVP-K85 were continuously fed to the feeding zone of a co-rotating twin-screw extruder having a working length of 60 D (ZSE 27 60D, Leistritz Extrusionstechnik GmbH, D-90459 Nürnberg) using screw feeders. Simultaneously, NMP and water were continuously fed to the feeding zone of the extruder. The weight ratio of the individual feed streams was 14 PES/2 PVP-K85/5 PVP-K30/76 NMP/3 water. The extruder was thermostatted at 78°C and operated at 150 rpm. The screws of the extruder comprised only mixing elements and had a screw thread pitch of 30 mm. A polymer solution comprising sporadic agglomerates was obtained.

### Example 4

PES, PVP-K30, and PVP-K85 were continuously fed to the feeding zone of a co-rotating twin-screw extruder having a working length of 60 D (ZSE 27 60D, Leistritz Extrusionstechnik GmbH, D-90459 Nürnberg) using screw feeders. Simultaneously, NMP and water were continuously fed to the feeding zone of the extruder. The weight ratio of the individual feed streams was 14 PES/2 PVP-K85/5 PVP-K30/76 NMP/3 water. The extruder was thermostatted at 78°C and operated at 150 rpm. The screws of the extruder comprised only mixing elements and had a screw thread pitch of less than 30 mm. No particles could be detected in the polymer solution obtained. The solution contained numerous air bubbles. The viscosity of the solution was measured to be 6,200 mPa*s.

### Example 5

PES, PVP-K30, and PVP-K85 were continuously fed to the feeding zone of a co-rotating twin-screw extruder having a working length of 60 D (ZSE 27 60D, Leistritz Extrusionstechnik GmbH, D-90459 Nürnberg) using screw feeders. Simultaneously, NMP and water were continuously fed to the feeding zone of the extruder. The weight ratio of the individual feed streams was 14 PES/2 PVP-K85/5 PVP-K30/76 NMP/3 water. The extruder was thermostatted at 78°C and operated at 200 rpm. The screws of the extruder comprised only mixing elements and had a screw thread pitch of less than 30 mm. In the end zone of the extruder, pressure was adjusted to 200 mbar using the vacuum venting system of the extruder. A clear solution containing neither particles nor air bubbles was obtained. The viscosity of the solution was measured to be 18,500 mPa*s.

## Claims

1. A continuous process for preparing a spinning solution comprising
i) continuously introducing into the feed zone of a multiple screw extruder
a) at least one hydrophobic polymer,
b) at least one hydrophilic polymer,
c) at least one solvent for the hydrophobic polymer and the hydrophilic polymer, and
d) optionally, at least one non-solvent for the hydrophobic polymer;
ii) continuously mixing a) to d) in the multiple screw extruder to form a homogeneous solution;
iii) continuously discharging the solution formed in step ii) from the multiple screw extruder.

2. The process of claim 1, wherein the at least one hydrophobic polymer is selected from the group consisting of polysulfones, polyethersulfones, polyamides, polycarbonates, polyethyleneimines, and cycloolefin copolymers.

3. The process of claim 1 or 2, wherein the at least one hydrophilic polymer is selected from the group consisting of polyvinylpyrrolidones, polyethyleneglycols, and polyoxazolines.

4. The process of any one of claims 1 to 3, wherein the solvent is selected from the group consisting of N-alkyl-2-pyrrolidone, dimethylacetamide, dimethylsulfoxide, tetrahydrofurane, gamma-butyrolactone, and dimethylformamide.

5. The process of any one of claims 1 to 4, wherein the non-solvent is selected from the group consisting of water and aliphatic alcohols.

6. The process of any one of claims 1 to 5, wherein the multiple screw extruder is a co-rotating twin screw extruder.

7. The process of any one of claims 1 to 6, wherein the temperature in the mixing zones of the extruder is in the range of from 20°C to 210°C.

8. The process of claim 7, wherein the temperature in the mixing zones of the extruder is in the range of from 40°C to 100°C.

9. The process of any one of claims 1 to 8, wherein the working length of the multiple screw extruder is 40D to 80D.

10. The process of any one of claims 1 to 9, wherein the multiple screw extruder is operated at 50 to 250 rpm.

11. The process of any one of claims 1 to 10, wherein the residence time in the multiple screw extruder is from 1 to 5 min.

12. The process of any one of claims 1 to 11, wherein the screws in the multiple screw extruder comprise mixing elements only.

13. The process of any one of claims 1 to 12, wherein the thread pitch of the screws in the multiple screw extruder is less than 30 mm.

14. The process of any one of claims 1 to 13, wherein the solution formed in step ii) is degassed prior to being discharged from the multiple screw extruder.

15. The process of claim 14, wherein the pressure in the end zone of the multiple extruder is reduced below atmospheric pressure to effect degassing of the solution formed in step ii).

## Patentansprüche

1. Kontinuierliches Verfahren zur Herstellung einer Spinnlösung, umfassend
i) kontinuierliche Zuführung in die Einzugszone eines Mehrwellenextruders
a) mindestens eines hydrophoben Polymers,
b) mindestens eines hydrophilen Polymers,
c) mindestens eines Lösemittels für das hydrophobe Polymer und das hydrophile Polymer, und
d) gegebenenfalls, mindestens eines Nichtlösemittels für das hydrophobe Polymer;
ii) kontinuierliches Mischen von a) bis d) in dem Mehrwellenextruder zur Bildung einer homogenen Lösung;
iii) kontinuierliches Ausspeisen der in Schritt ii) gebildeten Lösung aus dem Mehrwellenextruder.

2. Verfahren gemäß Anspruch 1, worin das mindestens eine hydrophobe Polymer ausgewählt ist aus der Gruppe bestehend aus Polysulfonen, Polyethersulfonen, Polyamiden, Polycarbonaten, Polyethyleniminen und Cycloolefincopolymeren.

3. Verfahren gemäß Anspruch 1 oder 2, worin das mindestens eine hydrophile Polymer ausgewählt ist aus der Gruppe bestehend aus Polyvinylpyrrolidonen, Polyethylenglycolen und Polyoxazolinen.

4. Verfahren gemäß einem der Ansprüche 1 bis 3, worin das Lösemittel ausgewählt ist aus der Gruppe bestehend aus N-alkyl-2-pyrrolidon, Dimethylacetamid, Dimethylsulfoxid, Tetrahydrofuran, gamma-Butyrolacton und Dimethylformamid.

5. Verfahren gemäß einem der Ansprüche 1 bis 4, worin das Nichtlösemittel ausgewählt ist aus der Gruppe bestehend aus Wasser und aliphatischen Alkoholen.

6. Verfahren gemäß einem der Ansprüche 1 bis 5, worin der Mehrwellenextruder ein gleichläufiger Doppelschneckenextruder ist.

7. Verfahren gemäß einem der Ansprüche 1 bis 6, worin die Temperatur in den Mischzonen des Extruders im Bereich von 20°C bis 210°C liegt.

8. Verfahren gemäß Anspruch 7, worin die Temperatur in den Mischzonen des Extruders im Bereich von 40°C bis 100°C liegt.

9. Verfahren gemäß einem der Ansprüche 1 bis 8, worin die Arbeitslänge des Mehrwellenextruders 40D bis 80D beträgt.

10. Verfahren gemäß einem der Ansprüche 1 bis 9, worin der der Mehrwellenextruder bei 50 bis 250 U/min betrieben wird.

11. Verfahren gemäß einem der Ansprüche 1 bis 10, worin die Verweilzeit in dem Mehrwellenextruder von 1 bis 5 min beträgt.

12. Verfahren gemäß einem der Ansprüche 1 bis 11, worin die Schnecken in dem Mehrwellenextruder ausschließlich Mischelemente aufweisen.

13. Verfahren gemäß einem der Ansprüche 1 bis 12, worin die Gewindesteigung der Schnecken in dem Mehrwellenextruder weniger als 30 mm beträgt.

14. Verfahren gemäß einem der Ansprüche 1 bis 13, worin die in Schritt ii) gebildete Lösung vor dem Ausspeisen aus dem Mehrwellenextruder entgast wird.

15. Verfahren gemäß Anspruch 14, worin der Druck in der Endzone des Mehrwellenextruders auf weniger als Atmosphärendruck verringert wird, um die Entgasung der in Schritt ii) gebildeten Lösung zu bewirken.

## Revendications

1. Processus continu pour préparer une solution de filage, comprenant les étapes consistant à
i) introduire en continu dans la zone d'alimentation d'une extrudeuse à vis multiples
a) au moins un polymère hydrophobe,
b) au moins un polymère hydrophile,
c) au moins un solvant pour le polymère hydrophobe et le polymère hydrophile, et
d) en option, au moins un non-solvant pour le polymère hydrophobe ;
ii) mélanger en continu a) à d) dans l'extrudeuse à vis multiples pour former une solution homogène ;
iii) décharger en continu la solution formée dans l'étape ii) depuis l'extrudeuse à vis multiples.

2. Processus selon la revendication 1, dans lequel ledit au moins un polymère hydrophobe est sélectionné parmi le groupe constitué de polysulfones, polyéthersulfones, polyamides, polycarbonates, polyéthylèneimines, et copolymères de cyclooléfines.

3. Processus selon la revendication 1 ou 2, dans lequel ledit au moins un polymère hydrophile est sélectionné parmi le groupe constitué de polyvinylpyrrolidones, polyéthylène glycols et polyoxazolines.

4. Processus selon l'une quelconque des revendications 1 à 3, dans lequel le solvant est sélectionné parmi le groupe constitué de N-alkyl-2-pyrrolidone, diméthylacétamide, diméthylsulfoxyde, tétrahydrofurane, gamma-butyrolactone et diméthylformamide.

5. Processus selon l'une quelconque des revendications 1 à 4, dans lequel le non-solvant est sélectionné parmi le groupe constitué de l'eau et des alcools aliphatiques.

6. Processus selon l'une quelconque des revendications 1 à 5, dans lequel l'extrudeuse à vis multiples est une extrudeuse à vis jumelles en corotation.

7. Processus selon l'une quelconque des revendications 1 à 6, dans lequel la température dans les zones de mélange de l'extrudeuse est dans la plage de 20° C à 210° C.

8. Processus selon la revendication 7, dans lequel la température dans les zones de mélange de l'extrudeuse est dans la plage de 40°C à 100°C.

9. Processus selon l'une quelconque des revendications 1 à 8, dans lequel la longueur de travail de l'extrudeuse à vis multiples est de 40D à 80D.

10. Processus selon l'une quelconque des revendications 1 à 9, dans lequel l'extrudeuse à vis multiples fonctionne à 50 à 250 tr/m.

11. Processus selon l'une quelconque des revendications 1 à 10, dans lequel le temps de séjour dans l'extrudeuse à vis multiples est de 1 à 5 minutes.

12. Processus selon l'une quelconque des revendications 1 à 11, dans lequel les vis dans l'extrudeuse à vis multiples comprennent uniquement des éléments de mélange.

13. Processus selon l'une quelconque des revendications 1 à 12, dans lequel le pas des vis dans l'extrudeuse à vis multiples est inférieur à 30 mm.

14. Processus selon l'une quelconque des revendications 1 à 13, dans lequel la solution formée dans l'étape ii) est dégazée avant d'être déchargée de l'extrudeuse à vis multiples.

15. Processus selon la revendication 14, dans lequel la pression dans la zone finale de l'extrudeuse à vis multiples et réduite au-dessous de la pression atmosphérique pour effectuer un dégazage de la solution formée dans l'étape ii).
